(19) Europäisches Patentamt
European Patent Office
Office européen des brevets

(11) **EP 4 296 925 A1**

(12) **EUROPEAN PATENT APPLICATION**

(43) Date of publication:
**27.12.2023 Bulletin 2023/52**

(51) International Patent Classification (IPC):
*G06Q 10/0833* (2023.01)

(21) Application number: **23179836.4**

(52) Cooperative Patent Classification (CPC):
**G06Q 10/0833; G01C 13/006; Y02A 20/204**

(22) Date of filing: **16.06.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.06.2022 KR 20220075959**

(71) Applicant: **Korea Institute of Ocean Science & Technology
Busan 49111 (KR)**

(72) Inventors:
• **YANG, Chan Su**
  **Busanjin-gu, Busan 47249 (KR)**
• **HARUN-AL, Rashid Ahmed**
  **Yeongdo-gu, Busan 49111 (KR)**

(74) Representative: **Krauns, Christian
Wallinger Ricker Schlotter Tostmann
Patent- und Rechtsanwälte Partnerschaft mbB
Zweibrückenstraße 5-7
80331 München (DE)**

(54) **SYSTEM AND METHOD FOR DETECTING OIL SPILL VESSEL**

(57) A method of detecting an oil spill vessel includes detecting an oil slick in an area of interest, which is estimated to be an area where the oil slick has been generated, determining an oil spill vessel generating the oil slick, and identifying information of the oil spill vessel.

[Fig.1]

```
┌─────────────────────────────────────────┐
│   Detecting oil slick in area of interest,│
│ which is estimated to be area where oil slick│ ─ S100
│           has been generated              │
└─────────────────────────────────────────┘
                    │
                    ▼
┌─────────────────────────────────────────┐
│   Determining oil spill vessel generating │ ─ S200
│               oil slick                   │
└─────────────────────────────────────────┘
                    │
                    ▼
┌─────────────────────────────────────────┐
│  Identifying information of oil spill vessel│ ─ S300
└─────────────────────────────────────────┘
```

EP 4 296 925 A1

## Description

CROSS REFERENCE TO RELATED APPLICATION

The present application claims priority to Korean Patent Application No. 10-2022-0075959, filed on June 22, 2022, the entire contents of which is incorporated herein for all purposes by this reference.

BACKGROUND OF THE INVENTION

Field of the Invention

The present disclosure relates to a system and method for detecting an oil spill vessel and, more particularly, to a system and method of detecting an oil slick in an area of interest and identifying an oil spill vessel among one or more vessels, if existing in the vicinity of the oil slick.

Description of the Related Art

Since vessels are propelled by the power of engines, the vessels are equipped with oil tanks to store and supply fuel. However, when vessels hit reefs or collide with other vessels, oil tanks are often damaged so oil leaks out. Especially in the case of large ships, tankers, etc., such oil spills cause serious problems to pollute the oceans so that marine ecosystems are destroyed, coastal and offshore resources are depleted, farmed fishes are killed, and so on.

Therefore, in order to reduce marine pollution caused by such oil spills, measures such as installation of oil fences to suppress oil spread and provision of emulsifiers to break down and settle oil are generally implemented. In order to implement these measures and estimate the oil spread area, early prediction of the spread area of oil spill in the ocean is necessary.

If a vessel deviates from its designated course, the vessel may run aground or collide with port facilities, causing loss of life and property. To prevent this, Vessel Traffic Services (VTSs) provide a control function that continuously monitors the position, speed, and course of vessels.

By default, vessels also periodically report their location and speed through Auto Identification System (AIS), which allows VTSs to check the vessels' statuses.

However, there are cases where AIS information is not available due to limited communication range, congestion, intentional turning off of AIS by illegal vessels, AIS failure, etc. In these cases, the vessels' information may be unknown.

In the case of oil spill, the spilled oil forms an oil slick over time and travels under the influence of currents and winds. If one or more vessels are present in the area of interest, it may not be possible to determine which vessel is responsible for the spill.

The foregoing is intended merely to aid in the understanding of the background of the present disclosure, and is not intended to mean that the present disclosure falls within the purview of the related art that is already known to those skilled in the art.

Documents of Related Art

(Patent Document 1) Korean Patent Registration No. 10-2131422

SUMMARY OF THE INVENTION

Accordingly, the present disclosure has been made keeping in mind the above problems occurring in the related art, and an objective of the present disclosure is to provide a system and method of detecting an oil slick in an area of interest and identifying an oil spill vessel among one or more vessels, if existing in the vicinity of the oil slick.

In an aspect of the present disclosure, a method of detecting an oil spill vessel includes: detecting an oil slick in an area of interest, which is estimated to be an area where the oil slick has been generated; determining an oil spill vessel generating the oil slick; and identifying information of the oil spill vessel.

The oil slick-detection may include: receiving remote sensing information of the area of interest from an aerospace platform; receiving maritime information and meteorological information of the area of interest; extracting the oil slick using the remote sensing information, maritime information and meteorological information of the area of interest; processing the location of the oil slick from the remote sensing information into virtual particle data; and tracking the trajectory of the oil slick by tracking the movement of the virtual particles in a forward or backward direction using the maritime information, meteorological information, and a coefficient value calculating a flow contribution ratio of the oil slick reflecting spatial variations in wind speeds and ocean currents.

The oil spill vessel-determination may include determining, as the oil spill vessel, a vessel that is at the end of the movement direction of the oil slick.

The oil spill vessel-determination may include determining, as the oil spill vessel, a vessel that is within a specified range.

The specified range may be set by assuming a set angle ($\theta$) in consideration of external forces such as ocean currents or winds, or an Azimuth shift phenomenon.

The oil spill vessel-determination may include determining the oil spill vessel by comparing a pattern of the backward tracking trajectory at the end of the oil slick movement direction with a pattern of the backward tracking trajectory of the vessel estimated to be the oil spill vessel.

In another aspect of the present disclosure, a system for detecting an oil spill vessel includes: an oil slick-detection unit configured to detect an oil slick in an area of interest, which is estimated to be an area where the oil slick has been generated; an oil spill vessel-determination unit configured to determine an oil spill vessel generating the oil slick; and an information-identifying unit configured to identify information of the oil spill vessel.

The oil slick-detection unit may include: a first receiver configured to receive remote sensing information of the area of interest from an aerospace platform; a second receiver configured to receive maritime information and meteorological information of the area of interest; an extractor configured to extract the oil slick using the remote sensing information, maritime information, and meteorological information of the area of interest; a data processor configured to process the location of the oil slick from the remote sensing information into virtual particle data; and a tracker configured to track the trajectory of the oil slick by tracking the movement of the virtual particles in a forward or backward direction using the maritime information, meteorological information, and a coefficient value calculating a flow contribution ratio of the oil slick reflecting spatial variations in wind speeds and ocean currents.

The oil spill vessel-determination unit may be configured to determine, as the oil spill vessel, a vessel that is at the end of the movement direction of the oil slick.

The oil spill vessel-determination unit may be configured to determine, as the oil spill vessel, a vessel that is within a specified range.

The specified range may be set by assuming a set angle ($\theta$) in consideration of external forces such as ocean currents or winds, or an Azimuth shift phenomenon.

The oil spill vessel-determination unit may be configured to determine the oil spill vessel by comparing a pattern of the backward tracking trajectory at the end of the oil slick movement direction with a pattern of the backward tracking trajectory of the vessel estimated to be the oil spill vessel.

According to the present disclosure, it is possible to detect the oil slick in an area of interest and, if there is one or more vessels in the vicinity of the oil slick, to detect a vessel that has spilled the oil.

BRIEF DESCRIPTION OF THE DRAWINGS

The above and other objectives, features and advantages of the present disclosure will be more clearly understood from the following detailed description when taken in conjunction with the accompanying drawings, in which:

FIG. 1 is a diagram illustrating the configuration of an oil spill vessel detection method according to an embodiment of the present disclosure;
FIG. 2 is a diagram illustrating oil slick and vessels in a region of interest according to an embodiment of the present disclosure;

FIGS. 3 to 6 are diagrams illustrating specific methods for identifying oil-spilled vessels according to an embodiment of the present disclosure; and
FIG. 7 is a diagram illustrating the configuration of an oil spill detection system according to an embodiment of the present disclosure.

DETAILED DESCRIPTION OF THE INVENTION

The present disclosure may be subjected to various modifications and may have many different embodiments, so certain embodiments are illustrated in the drawings and described in detail in the description below. However, this is not intended to limit the invention to any particular embodiment, so it should be understood that the invention includes all modifications, equivalents, or substitutions that fall within the spirit and technical scope of the invention.

In describing the present disclosure, if it is determined that a detailed description of the related prior art would unnecessarily obscure the gist of the present disclosure, such a detailed description will be omitted. In addition, numbers (e.g., first, second, etc.) utilized in the course of the description herein are merely identifiers to distinguish one component from another.

Furthermore, when a component is referred to herein as being "connected" or "coupled" to another component, it is to be understood that the component may be not only directly connected or coupled to the other component, but also indirectly connected or coupled thereto with a further intermediate component interposed therebetween, unless otherwise stated.

Hereinafter, preferred embodiments of the present disclosure will be described in detail with reference to the accompanying drawings.

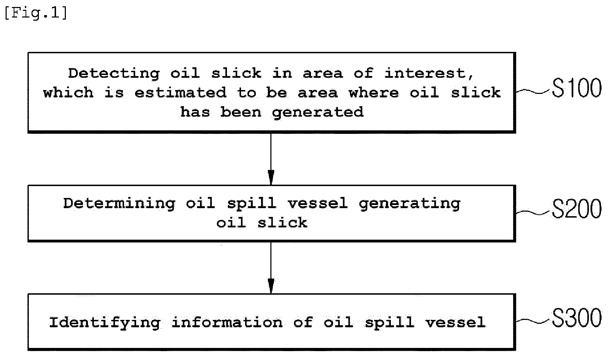

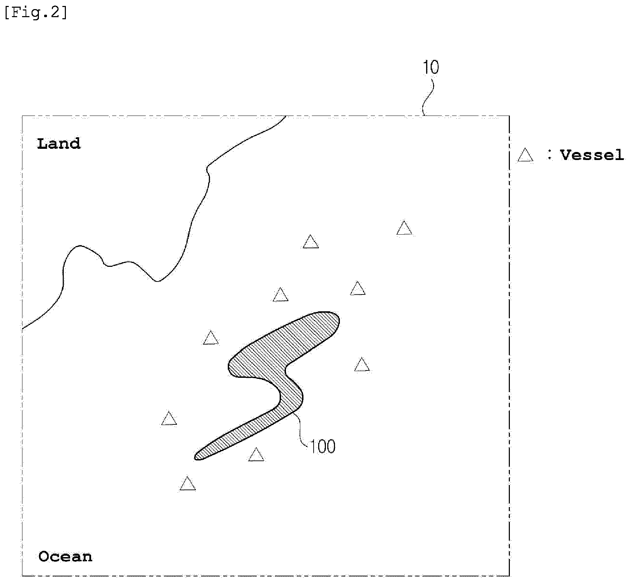

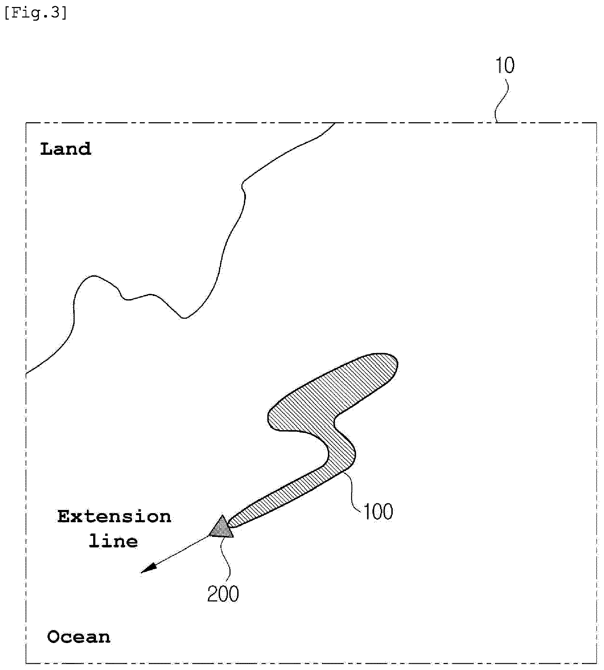

FIG. 1 is a diagram illustrating the configuration of an oil spill vessel detection method according to an embodiment of the present disclosure, FIG. 2 is a diagram illustrating oil slick and vessels in a region of interest according to an embodiment of the present disclosure, and FIGS. 3 to 6 are diagrams illustrating specific methods for identifying oil-spilled vessels according to an embodiment of the present disclosure.

Referring to FIGS. 1 to 6, the oil spill vessel detection method according to the present disclosure includes detecting an oil slick 100 in an area of interest 10, which is estimated to be an area where the oil spill has occurred (S100).

The area of interest 10 may include one or more of the following: i) an area for which the occurrence of the oil spill has been reported, ii) an area for which the oil spill has been determined to be likely to occur by surveillance by a ship, aircraft, satellite, or the like, and iii) an area to be estimated to be an area to which the oil spill migrate from the areas described by i) and ii).

Subsequently, an oil spill vessel 200 generating the detected oil slick 100 is determined (S200)
Subsequently, information of the determined oil spill vessel 200 is identified (S300).

If there is more than one oil spill vessel 200 that generates the oil slick 100 detected in the area of interest 10 as illustrated in FIG. 2, it is necessary to determine which vessel has spilled oil. This determination of the oil spill vessel 200 enables an oil spill prevention operation to proceed quickly and efficiently.

The oil slick-determination S100 in the area of interest 10, which is an area for which the oil spill is estimated to have occurred, may include: receiving remote sensing information of the area of interest 10 from an aerospace platform (S110); receiving maritime information and meteorological information of the area of interest 10 (S120); extracting the oil slick using the remote sensing information, maritime information and meteorological information of the area of interest (S125); processing the location of the oil slick from the remote sensing information into virtual particle data (S130); and tracking the trajectory of the oil slick by tracking the movement of the virtual particles in a forward or backward direction using the maritime information, meteorological information, and a coefficient value calculating a flow contribution ratio of the oil slick reflecting spatial variations in wind speeds and ocean currents (S140).

The aerospace platform may include one or more of a satellite, a manned aircraft, or an unmanned aircraft. However, the present disclosure is not limited thereto.

The remote sensing information, the maritime information, and the meteorological information are information received in a first time period in the area of interest 10, and the oil slick trajectory-tracking S140 may track the movement speed and range of the soil slick for a second time period depending on the information received in the first time period.

The remote sensing information may include at least one of image data and radio characteristic data obtained from an optical sensor, an infrared sensor, an ultraviolet sensor, or a microwave sensor.

The maritime information may include at least one of speed and direction of a tide, and speed and direction of a current in the area of interest 10.

The meteorological information may include information about wind speed and wind direction in the area of interest 10.

The backward tracking of the movement of the virtual particle in S140 may be estimated based on the following Equations 1 and 2.

Equation 1

$$x_i^{t+\Delta t} = x_i^t + v_i^t \Delta t + u_d$$

Equation 2

$$x_i^{t-\Delta t} = x_i^t - v_i^t \Delta t + u_d$$

where $x_i^{t-\Delta t}$, $x_i^t$, $x_i^{t+\Delta t}$ : are the positions of the i-th virtual particle at the moment of $t-\Delta t, t, t+\Delta t$, $v$ is the velocity applied with a coefficient value calculated to obtain a flow contribution ratio of the oil slick reflecting a spatial variation of wind speeds and ocean currents, and $u_d$ is the turbulent diffusion velocity.

The velocity $v$, which is calculated by applying the coefficient value that calculates the flow contribution ratio of the oil slick reflecting the spatial variation of wind speeds and ocean currents is based on the following Equation 3.

Equation 3

$$v = C_c u_c + C_w u_w$$

where $C_c$ is a current drift coefficient, $u_c$ is the surface current velocity, $C_w$ is a wind drag coefficient, and $u_w$ is wind speed.

Referring to FIG. 3, in one embodiment, the oil spill vessel-determination S200 may include determining, as the oil spill vessel, a vessel that is at the end of the movement direction of the oil slick.

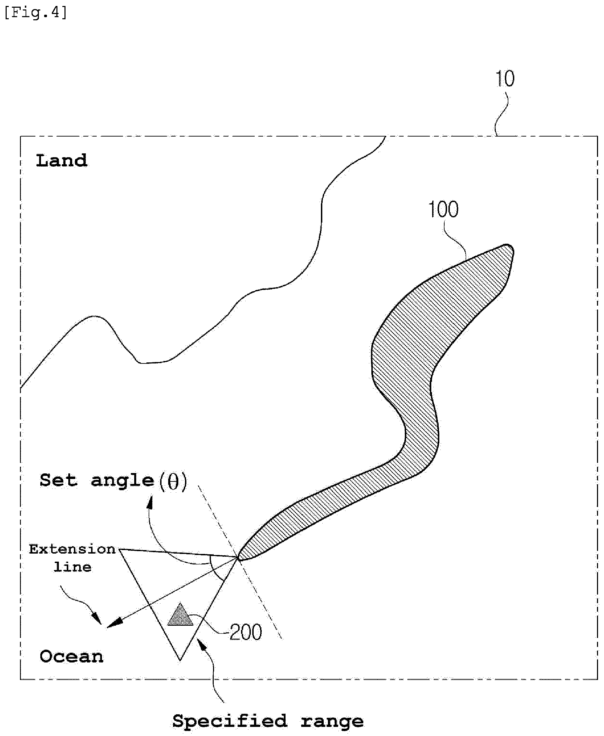

Referring to FIG. 4, in one embodiment, the oil spill vessel-determination S200 may include determining, as the oil spill vessel, a vessel that is within a specified range.

The specified range may be set by assuming a set angle (θ) in consideration of external forces such as ocean currents or winds, or an Azimuth shift phenomenon.

The specified range may be established by assuming the set angle (θ) centered on an extension of the end of the movement direction of the oil slick 100 to form a fan shape, and a vessel located within the fan shape may be determined as the oil spill vessel.

The set angle (θ) may be set in consideration of external forces such as ocean currents and winds. Preferably, the set angle (θ) ranges from 5° or more to 10° or less. More preferably, when the external forces such as currents or winds are large, the set angle (θ) is preferably set to 10°, and when the external forces such as currents or winds are small, the set angle (θ) is preferably set to 5°.

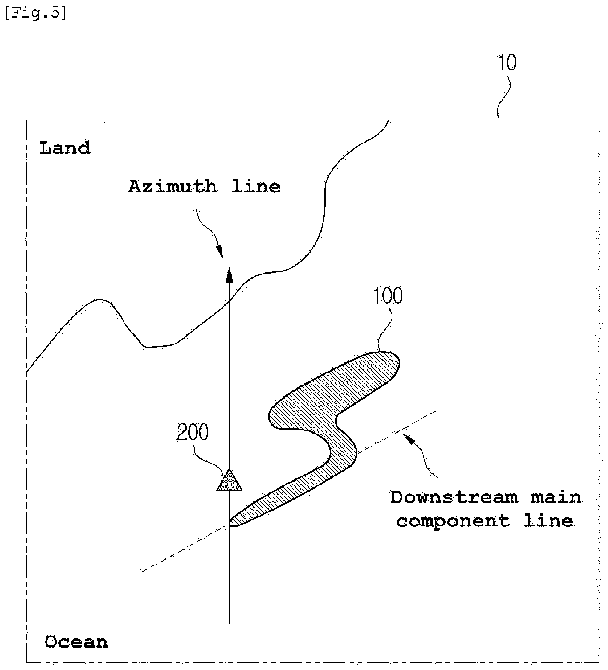

Referring to FIG. 5, in the oil spill vessel-determination S200, in one embodiment, the oil spill vessel may be determined by considering an Azimuth shift phenomenon. A moving object, such as a vessel, exhibits an Azimuth shift phenomenon. In FIG. 5, when a vessel that spilled oil corresponding to the oil slick 100 is the same as the oil spill vessel 200 indicated, the downstream main component line and the oil spill vessel 200 are separated by a certain interval due to the Azimuth shift phenomenon, so a vessel within a specified range may be determined as the oil spill vessel 200 by considering the Azimuth shift phenomenon.

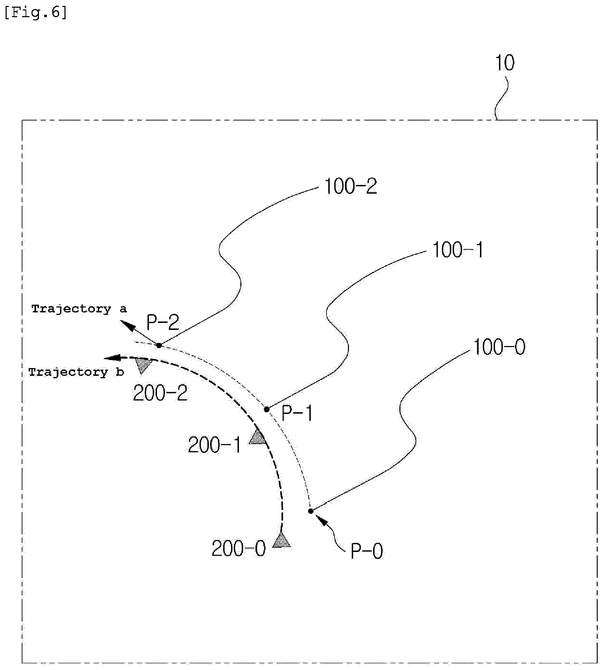

Referring to FIG. 6, in one embodiment, the oil spill vessel-determination S200 may include determining the oil spill vessel 200 by comparing a pattern of the backward tracking trajectory (trajectory a) of the end P of the oil slick 100 movement direction with a pattern of the backward tracking trajectory (trajectory b) of the vessel estimated to be the oil spill vessel 200.

More specifically, referring to FIG. 6, the trajectory of the end P-0 to P-2 of the movement direction of the oil slick 100-0 to 100-2 from the time t0 to the time t-2 (backward tracking) is derived as the trajectory a, the trajectory of the movement direction of the vessel estimated to be the oil spill vessel 200-0 to 200-2 causing the oil slick 100 from the time t0 to the time t-2 is derived as the trajectory b, and the similarity of the trajectory a and the trajectory b is determined, and if the similarity is high, the vessel may be identified as the oil spill vessel 200.

In the oil spill vessel 200 information-identification S300, the information of the oil spill vessel determined in S200 is identified. The information of the oil spill vessel includes all kinds of vessel information, such as the type, the navigation route, etc. of the vessel, that can be obtained through the control tower or AIS information. After identifying the information, the spill prevention operation may be carried out efficiently by deciding how to carry out the spill prevention operation depending on the oil spill vessel information.

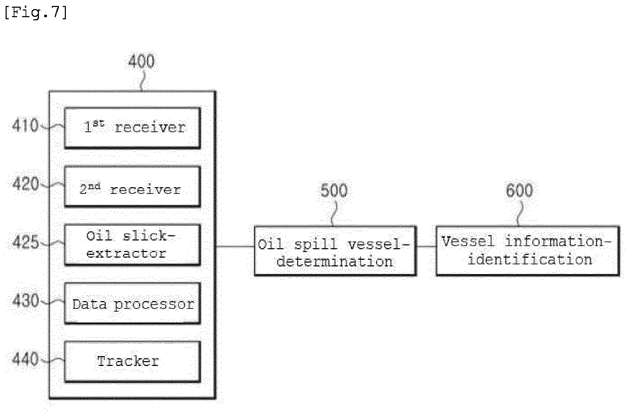

FIG. 7 is a diagram illustrating the configuration of an oil spill detection system according to an embodiment of the present disclosure.

Referring to FIG. 7, the oil spill vessel detection system includes: an oil slick-detection unit 400, an oil spill vessel-determination unit 500, and an information-identifying unit 600.

The oil slick-detection unit 400 may be configured to detect an oil slick 100 in an area of interest 100, which is estimated to be an area for which the oil spill has occurred.

The oil spill vessel-determination unit 500 may be configured to determine an oil spill vessel 200 generating the oil slick 100.

The information-identifying unit 600 may be configured to identify information of the oil spill vessel 200.

The oil slick-detection unit 400 includes: a first receiver 410 configured to receive remote sensing information of the area of interest from an aerospace platform; a second receiver 420 configured to receive maritime information and meteorological information of the area of interest; an extractor 425 configured to extract the oil slick using the remote sensing information, maritime information, and meteorological information of the area of interest; a data processor 430 configured to process the location of the oil slick from the remote sensing information into virtual particle data; and a tracker 440 configured to track the trajectory of the oil slick by tracking the movement of the virtual particles in a forward or backward direction using the maritime information, meteorological information, and a coefficient value calculating a flow contribution ratio of the oil slick reflecting spatial variations in wind speeds and ocean currents.

The aerospace platform may include one or more of a satellite, a manned aircraft, or an unmanned aircraft. However, the present disclosure is not limited thereto.

The remote sensing information, the maritime information, and the meteorological information are information received in a first time period in the area of interest 10, and the oil slick trajectory-tracking S140 may track the movement speed and range of the soil slick for a second time period depending on the information received in the first time period.

The remote sensing information may include at least one of image data and radio characteristic data obtained from an optical sensor, an infrared sensor, an ultraviolet sensor, or a microwave sensor.

The maritime information may include at least one of speed and direction of a tide, and speed and direction of a current in the area of interest 10.

The meteorological information may include information about wind speed and wind direction in the area of interest 10.

In the tracking unit 440, the forward or backward tracking of the movement of the virtual particle may be estimated based on the above Equations 1 and 2.

The velocity $v$, which is calculated by applying the coefficient value that calculates the flow contribution ratio of the oil slick reflecting the spatial variation of wind speeds and ocean currents, is based on the above Equation 3.

Referring to FIG. 3, in one embodiment, in the oil spill vessel-determination unit 500, a vessel that is at the end of the movement direction of the oil slick may be determined as the oil spill vessel.

Referring to FIG. 4, in one embodiment, in the oil spill vessel-determination unit 500, a vessel that is within a specified range may be determined as the oil spill vessel.

The specified range may be set by assuming a set angle ($\theta$) in consideration of external forces such as ocean currents or winds, or an Azimuth shift phenomenon.

The specified range may be established by assuming the set angle ($\theta$) centered on an extension of the end of the movement direction of the oil slick 100 to form a fan shape, and a vessel located within the fan shape may be determined as the oil spill vessel.

The set angle (θ) may be set in consideration of external forces such as ocean currents and winds. Preferably, the set angle (θ) ranges from 5° or more to 10° or less. More preferably, when the external forces such as currents or winds are large, the set angle (θ) is preferably set to 10°, and when the external forces such as currents or winds are small, the set angle (θ) is preferably set to 5°.

Referring to FIG. 5, in the oil spill vessel-determination unit 500, in one embodiment, the oil spill vessel may be determined by considering an Azimuth shift phenomenon. A moving object, such as a vessel, exhibits an Azimuth shift phenomenon. In FIG. 5, when a vessel that spilled oil corresponding to the oil slick 100 is the same as the oil spill vessel 200 indicated, the downstream main component line and the oil spill vessel 200 are separated by a certain interval due to the Azimuth shift phenomenon, so a vessel within a specified range may be determined as the oil spill vessel 200 by considering the Azimuth shift phenomenon.

Referring to FIG. 6, in one embodiment, in the oil spill vessel-determination unit 500, the oil spill vessel 200 may be determined by comparing a pattern of the backward tracking trajectory (trajectory a) of the end P of the oil slick 100 movement direction with a pattern of the backward tracking trajectory (trajectory b) of the vessel estimated to be the oil spill vessel 200.

More specifically, referring to FIG. 6, the trajectory of the end P-0 to P-2 of the movement direction of the oil slick 100-0 to 100-2 from the time t0 to the time t-2 (backward tracking) is derived as the trajectory a, the trajectory of the movement direction of the vessel estimated to be the oil spill vessel 200-0 to 200-2 causing the oil slick 100 from the time t0 to the time t-2 is derived as the trajectory b, and the similarity of the trajectory a and the trajectory b is determined, and if the similarity is high, the vessel may be identified as the oil spill vessel 200.

In the oil spill vessel information-identifying unit 600, the information of the determined oil spill vessel is identified. The information of the oil spill vessel includes all kinds of vessel information, such as the type, the navigation route, etc. of the vessel, that can be obtained through the control tower or AIS information. After identifying the information, the spill prevention operation may be carried out efficiently by deciding how to carry out the spill prevention operation depending on the oil spill vessel information.

The scope of the invention is not limited to the embodiments described above, but may be embodied in various forms within the scope of the attached claims. Various modifications that can be made by anyone having ordinary knowledge in the art to which the invention belongs, without departing from the gist of the invention are considered to be within the scope of the claimed subject matter.

## Claims

1. A method of detecting an oil spill vessel, the method comprising:

   detecting an oil slick in an area of interest, which is estimated to be an area where the oil slick has been generated;
   determining an oil spill vessel generating the oil slick; and
   identifying information of the oil spill vessel.

2. The method according to claim 1, wherein the oil slick-detection comprises:

   receiving remote sensing information of the area of interest from an aerospace platform;
   receiving maritime information and meteorological information of the area of interest;
   extracting the oil slick using the remote sensing information, maritime information and meteorological information of the area of interest;
   processing the location of the oil slick from the remote sensing information into virtual particle data; and
   tracking the trajectory of the oil slick by tracking the movement of the virtual particles in a forward or backward direction using the maritime information, meteorological information, and a coefficient value calculating a flow contribution ratio of the oil slick reflecting spatial variations in wind speeds and ocean currents.

3. The method according to claim 1 or 2, wherein the oil spill vessel-determination comprises determining, as the oil spill vessel, a vessel that is at the end of the movement direction of the oil slick.

4. The method according to any one of claims 1 to 3, wherein the oil spill vessel-determination comprises determining, as the oil spill vessel, a vessel that is within a specified range.

5. A system for detecting an oil spill vessel, the system comprising:

   an oil slick-detection unit configured to detect an oil slick in an area of interest, which is estimated to be an area where the oil slick has been generated;
   an oil spill vessel-determination unit configured to determine an oil spill vessel generating the oil slick; and
   an information-identifying unit configured to identify information of the oil spill vessel.

6. The system according to claim 5, wherein the oil slick-detection unit comprises:

a first receiver configured to receive remote sensing information of the area of interest from an artificial satellite;

a second receiver configured to receive maritime information and meteorological information of the area of interest;

an extractor configured to extract the oil slick using the remote sensing information, maritime information, and meteorological information of the area of interest;

a data processor configured to process the location of the oil slick from the remote sensing information into virtual particle data; and

a tracker configured to track the trajectory of the oil slick by tracking the movement of the virtual particles in a forward or backward direction using the maritime information, meteorological information, and a coefficient value calculating a flow contribution ratio of the oil slick reflecting spatial variations in wind speeds and ocean currents.

7. The system according to claim 5 or 6, wherein the oil spill vessel-determination unit is configured to determine, as the oil spill vessel, a vessel that is at the end of the movement direction of the oil slick.

8. The system according to any one of claims 5 to 7, wherein the oil spill vessel-determination unit is configured to determine, as the oil spill vessel, a vessel that is within a specified range.

[Fig.1]

```
┌──────────────────────────────────────────────┐
│     Detecting oil slick in area of interest,  │
│  which is estimated to be area where oil slick │──～S100
│              has been generated                │
└──────────────────────────────────────────────┘
                        │
                        ▼
┌──────────────────────────────────────────────┐
│     Determining oil spill vessel generating    │──～S200
│                  oil slick                     │
└──────────────────────────────────────────────┘
                        │
                        ▼
┌──────────────────────────────────────────────┐
│                                                │
│   Identifying information of oil spill vessel  │──～S300
│                                                │
└──────────────────────────────────────────────┘
```

[Fig.2]

[Fig.3]

[Fig.4]

Specified range

[Fig.5]

[Fig.6]

[Fig.7]

Europäisches
Patentamt

European
Patent Office

Office européen
des brevets

# EUROPEAN SEARCH REPORT

Application Number

**EP 23 17 9836**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2020 0032452 A (KOREA INST OCEAN SCI & TECH [KR]) 26 March 2020 (2020-03-26)<br>* paragraph [0001] – paragraph [0003] *<br>* paragraph [0008] – paragraph [0011] *<br>* paragraph [0014] – paragraph [0028] *<br>* paragraph [0048] *<br>----- | 1-8 | INV.<br>G06Q10/0833 |
| T | KLEMAS V: "Tracking and monitoring oil slicks using remote sensing",<br>BALTIC INTERNATIONAL SYMPOSIUM (BALTIC), 2012 IEEE/OES, IEEE,<br>8 May 2012 (2012-05-08), pages 1-7,<br>XP032226523,<br>DOI: 10.1109/BALTIC.2012.6249216<br>ISBN: 978-1-4673-1413-8<br>* cf. sections II and III. *<br>----- | | |

**TECHNICAL FIELDS SEARCHED (IPC)**

G06Q
G01C

The present search report has been drawn up for all claims

| Place of search | Date of completion of the search | Examiner |
|---|---|---|
| Munich | 25 October 2023 | Reino, Bernardo |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 17 9836

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2023

| Patent document cited in search report | Publication date | Patent family member(s) | Publication date |
|---|---|---|---|
| KR 20200032452 A | 26-03-2020 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220075959

- KR 102131422